# FASCICULE DE BREVET EUROPEEN

(11) **EP 2 445 766 B1**
(45) Date de publication et mention de la délivrance du brevet: **06.03.2013**
(21) Numéro de dépôt: 10725140.7
(22) Date de dépôt: 11.06.2010
(51) Int. Cl.: B60T 13/68, B60T 8/32, B60T 13/14, B60T 17/22

(54) **SYSTEME DE FREINS HYDRAULIQUES A ASSISTANCE HYDRAULIQUE.**
HYDRAULISCHES BREMSSYSTEM MIT HYDRAULISCHER UNTERSTÜTZUNG
HYDRAULIC BRAKING SYSTEM WITH HYDRAULIC ASSISTANCE

(30) Priorité: 25.06.2009 FR 0903105
(43) Date de publication de la demande: 02.05.2012
(73) Titulaire: Robert Bosch GmbH, 70442 Stuttgart (DE)
(72) Inventeur: ANDERSON, Chris, F-75002 Paris (FR); HURWIC, Aleksander, F-75020 Paris (FR); BEYLERIAN, Bruno, F-95380 Louvres (FR)
(86) Numéro de dépôt international: PCT/EP2010/058215
(87) Numéro de publication internationale: WO 2010/149510

(56) Documents cités:
- EP-A1- 0 389 993
- DE-A1- 19 743 305

## Description

### Domaine de l'invention

La présente invention concerne un système de freins hydrauliques à assistance hydraulique comprenant
- un maître-cylindre comportant une chambre de poussée et recevant sur commande du liquide de freins sous pression d'un accumulateur par l'intermédiaire d'une électrovanne commandée par un calculateur à partir du signal fourni par le capteur de la pédale de frein,
- une source d'énergie électrique alimentant au moins l'électrovanne, le calculateur et le capteur.

Le document EP 0 389 993 divulgue un tel système de freins.

En cas de défaillance de l'alimentation électrique assurée par le circuit embarqué, typiquement un alternateur et une batterie au plomb 12 volts, le frein ne peut fonctionner sans assistance puisque l'assistance électrohydraulique disparait : l'électrovanne commandant l'alimentation de la chambre de commande du maître-cylindre ne peut être actionnée de sorte que même si l'accumulateur de pression contient une réserve de liquide sous pression, cette réserve ne peur agir sur le maître-cylindre pour commander une action de freinage.

Le fonctionnement de secours ne peut être assuré que de manière mécanique par l'intermédiaire d'une tige de commande entrainée par la pédale de frein qui commande alors directement le piston primaire du maître-cylindre.

En cas de fonctionnement en défaillance, le conducteur devra fournir une poussée qui correspond à la somme de la poussée nécessaire à la commande du piston du maître-cylindre (ou piston primaire dans le cas d'un maître-cylindre tandem) et la réaction exercée par le simulateur de frein éventuel.

L'opération de freinage devient pénible voire difficile dans certains cas surtout pour un conducteur n'ayant pas la force suffisante pour freiner sans assistance.

Cette situation est d'autant plus paradoxale qu'en cas de défaillance de l'alimentation électrique du véhicule, l'accumulateur de pression peut encore être chargé et pourrait assurer une commande hydraulique du maître-cylindre pour quelques coups de frein.

### But de l'invention

La présente invention a pour but de développer un système de freins hydrauliques à assistance hydraulique ou électrohydraulique permettant un fonctionnement de secours, provisoire pour freiner le véhicule en cas de défaillance du réseau électrique embarqué du véhicule.

### Exposé et avantages de l'invention

A cet effet, l'invention concerne un système de freins hydrauliques du type défini ci-dessus caractérisé en ce qu'une source auxiliaire d'énergie électrique branchée au circuit alimentant le calculateur, le capteur et l'électrovanne en cas de détection de la défaillance de la source d'énergie principale électrique pour permettre l'actionnement de secours de l'électrovanne et l'alimentation du circuit de frein pour un nombre limité de coups de frein.

Ainsi selon l'invention, la source auxiliaire d'énergie électrique permet un fonctionnement de secours en ce qu'elle est uniquement reliée aux composants indispensables du système de freins hydrauliques permettant d'actionner hydrauliquement le maître-cylindre de frein en cas de défaillance du réseau électrique embarqué, en supposant une réserve suffisante de liquide sous pression dans l'accumulateur de pression.

Cette solution n'exclut pas en dernier ressort la commande mécanique directe du maître-cylindre à partir de la pédale de frein par une action exercée sur la pédale et qui dépasse la réaction exercée par l'éventuel simulateur de frein interposé entre la pédale et le maître-cylindre et exerçant alors sur le piston du maître-cylindre, la poussée nécessaire à la création de la pression de freinage dans le ou les circuits de freins commandé par le maître-cylindre.

Le système de freins hydrauliques selon l'invention permet à faible coût, l'assistance électro hydraulique de freinage en cas de panne du circuit électrique principal.

De façon particulièrement avantageuse, les organes de commande de l'assistance au freinage, typiquement l'électrovanne, le calculateur et le capteur sont reliés à la source principale d'énergie électrique indépendamment du circuit électrique embarqué, alimenté directement par la source principale d'énergie électrique. Cela simplifie la gestion des circuits électriques du véhicule puisque cette séparation permet ensuite d'alimenter indépendamment et uniquement l'électrovanne, le calculateur et le capteur en cas de défaillance de la source principale. On ne risque pas d'épuiser inutilement la source auxiliaire par l'alimentation de consommateurs qui pourraient être branchés sur le circuit de bord.

Cette liaison commandée par un commutateur électronique permet d'utiliser les lignes d'alimentation de l'électrovanne, du calculateur et du capteur sur lesquelles est branchée la source principale sans que l'on risque de faire débiter la source auxiliaire dans la source principale dont la liaison avec le circuit est équipée d'un composant électronique unidirectionnel tel qu'une diode qui interdit la recharge de la source principale par la source auxiliaire.

La source auxiliaire est constituée avantageusement par une petite batterie ou une pile ayant une capacité suffisante pour permettre d'actionner un nombre réduit de fois les moyens de secours (électrovanne, calculateur et capteur) pour commander l'assistance au freinage.

La source auxiliaire est avantageusement reliée à un témoin de fonctionnement qui indique l'état actif de la source auxiliaire ce qui permet d'avertir le conducteur d'une part que la source principale est défaillante et que d'autre part, pendant les freinages en cours, la source auxiliaire est mise en oeuvre. Cela incitera le conducteur à économiser le freinage ou à utiliser de préférence l'énergie électrique encore disponible pour arrêter le véhicule.

Selon une autre caractéristique avantageuse, le commutateur électronique commandant la mise en oeuvre de la source auxiliaire est un thyristor.

Suivant une autre caractéristique avantageuse, la liaison entre l'autre consommateur électrique de l'assistance électrohydraulique, à savoir l'électropompe indépendante du circuit alimentant l'électrovanne, le calculateur et le capteur et, en particulier cette liaison est faite directement avec le réseau de bord. Cela n'exclut pas que la commande de l'électropompe soit faite par le calculateur en fonction de la demande de pression de l'accumulateur de pression.

### Dessins

La présente invention sera décrite ci-après de manière plus détaillée à l'aide d'un exemple de réalisation d'un système de freins hydrauliques à assistance électrohydraulique représenté dans les dessins annexés dans lesquels :
- la figure 1 montre le système de freins hydrauliques selon l'invention au repos,
- la figure 2 montre le système de freins selon l'invention en position activée.

### Description d'un mode de réalisation de l'invention

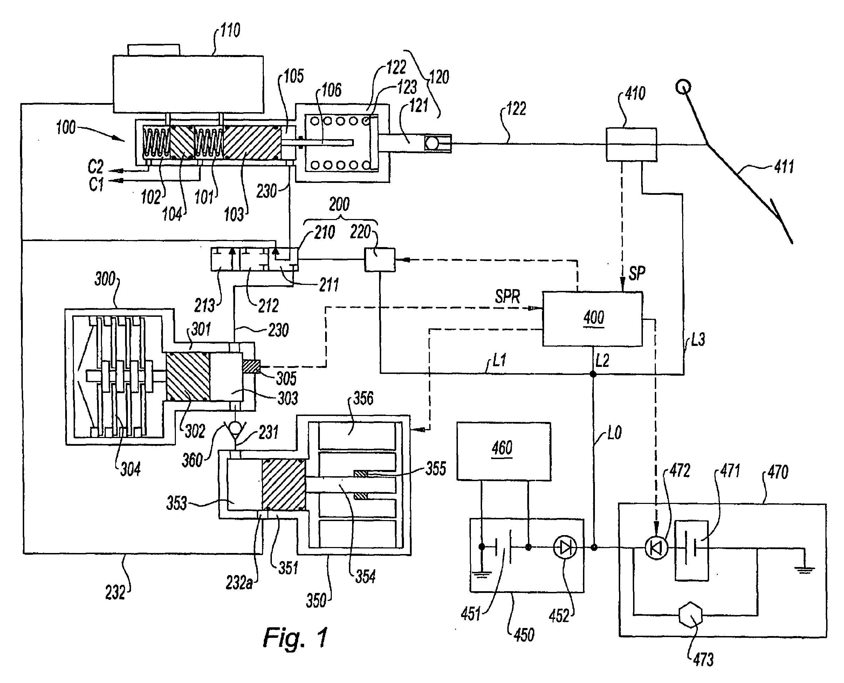

Selon la figure 1, le système de freins hydrauliques à assistance électrohydraulique selon l'invention se compose d'un maître-cylindre 100, ici d'un maître-cylindre tandem, alimentant, sur commande, deux circuits de freins indépendants C1, C2 en liquide hydraulique sous pression. Le maître-cylindre 100 est équipé d'un réservoir de liquide de frein 110. Il comporte une chambre de poussée 105 alimentée, sur commande, par du liquide hydraulique sous pression à travers une électrovanne 200 à partir d'un accumulateur 300 de liquide sous pression, lui-même alimenté par une source de liquide de frein sous pression typiquement un maître-cylindre dont un piston est entrainé par un moteur, avantageusement électrique ou par une électropompe 350 reliée au réservoir de liquide hydraulique 110.

Le fonctionnement du système de freinage est géré par un calculateur 400 relié à un capteur 410 équipant la pédale de frein 411.

L'alimentation électrique est assurée par une source principale d'énergie électrique 450 alimente le circuit de bord 460 du véhicule. Ce circuit 460, qui peut être complexe, est schématisé par un rectangle qui représente tous les utilisateurs et consommateurs de courant électrique. Une source auxiliaire 470 est reliée à un certain composant du système de freinage hydraulique.

La pédale de frein 411 est aussi reliée au maître-cylindre 100 par l'intermédiaire d'un organe de transmission 120.

De façon plus détaillée :

Le maître-cylindre tandem 100 comporte deux chambre 101, 102 séparées par un piston flottant ou piston secondaire 104. Chacune des chambres est reliée séparément à son circuit de frein C1, C2 et alimentée séparément à partir du réservoir 110. Le maître-cylindre tandem 100 comporte un piston primaire 103 délimitant une chambre de commande 105 recevant le liquide hydraulique sous pression pour commander l'actionnement du maître-cylindre.

Le piston 103 est entrainé par une tige de commande 122 soit comme illustré, le maître-cylindre tandem 100 est équipé de l'organe de transmission 120 fonctionnant à la fois comme un simulateur de freinage et un organe de transmission mécanique de secours.

Le capteur de freinage 410 détecte le mouvement de la pédale de frein 411 transmis à la tige de commande 122 et fournit un signal SP au calculateur 400.

L'électrovanne 200 installée dans la conduite 230 d'alimentation de la chambre de commande 105 du maître-cylindre tandem 100 à partir de l'accumulateur 300 se compose d'un tiroir 210 et d'un actionneur électromagnétique 220 commandé par le calculateur 400 et alimenté en énergie électrique à partir de la source principale 450 par une ligne L1.

Le tiroir 210 comporte trois secteurs 211, 212, 213 qui, mis en position active, assurent respectivement :
a- le retour de la chambre 105 au réservoir 110 et la coupure de la sortie de l'accumulateur 300,
b- la coupure de la chambre 105 et celle de la sortie de l'accumulateur 300,
c- la communication entre la chambre 105 et l'accumulateur 300.

La position (a) est la position neutre du système de freinage. Aucune pression n'est exercée sur la pédale de frein et les circuits de freinage C1, C2 sont neutralisés.

La position (b) est la position de blocage : la chambre de commande 105 du maître-cylindre est bloquée ce qui bloque le maître-cylindre dans la position dans laquelle se trouvaient ses pistons 103, 104 au moment du passage du tiroir 210 à la position (b). Cette position (b) bloque également la chambre 303 de l'accumulateur 300. Cette position permet le maintien de l'assistance de freinage constante sans consommation de liquide de frein.

La position (c) est la position active du système de freinage, c'est-à-dire qu'elle permet la commande du maître-cylindre tandem 100 à partir de l'accumulateur 300 par le liquide sous pression de l'accumulateur alimentant la chambre 105 pendant toute la durée pendant laquelle le tiroir de l'électrovanne se trouve dans cette position (c).

L'accumulateur de liquide sous pression 300 se compose d'un cylindre 301 dans lequel un piston 302 délimite une chambre 303 recevant du liquide sous pression. Le piston 302 est relié à un paquet de ressorts antagonistes 304 qui ne peut être repoussé par le piston 302 qui si lui-même est soumis à du liquide sous pression dans la chambre 303.

La chambre 303 est équipée d'un capteur de pression 305 qui transmet un signal de pression SPR au calculateur 400. Le calculateur 400 compare ce signal de pression SPR à un signal de consigne et, en fonction de cette comparaison, il commande l'alimentation de la chambre 303 en liquide sous pression.

La chambre 303 est reliée en sortie à la conduite 230 en amont de l'électrovanne 200. L'entrée de la chambre 303 est reliée par une conduite 231 équipée du clapet anti-retour 360 à l'électrocompresseur 350. Le clapet 360 s'ouvre dans le sens allant de l'électrocompresseur 350 vers la chambre 303.

L'électrocompresseur 350 a une structure analogue à celle de l'accumulateur sauf que le paquet de ressorts est remplacé par un moteur de façon à faire fonctionner un piston comme compresseur.

Ainsi, l'électrocompresseur 350 comprend un cylindre 351 dans lequel un piston 352 délimite une chambre de pression 353. Le piston 352 est déplacé par une transmission à vis formée d'une tige filetée reliée à la tige de piston 354 ou constituée en partie par celle-ci et sur laquelle est vissé un écrou 355 libre en rotation mais fixé en translation, la tige filetée étant, elle, libre en translation mais bloquée en rotation. L'écrou 355 est entrainé par un moteur électrique 356. Le système d'entraînement assure ainsi la démultiplication permettant l'établissement d'une pression de refoulement élevée.

Le moteur électrique 356 est commandé par le calculateur 400 et alimenté en énergie électrique par la source principale 450.

La chambre de pression 353 est reliée en sortie à la conduite 231 en amont du clapet anti-retour 360 et son entrée est reliée par la conduite 232 au réservoir 110. Le piston 352 coupe l'entrée 322a de la chambre 353 en l'obturant pour une certaine position de déplacement, pour ensuite refouler le liquide sous pression de la chambre 353 dans l'accumulateur 300 contre la poussée antagoniste exercée par les ressorts 304 jusqu'à ce que la pression de consigne soit atteinte dans la chambre 303 de l'accumulateur 300.

La source principale d'énergie électrique 450 se compose de la batterie 451 typiquement au plomb du véhicule, rechargée à partir du circuit de bord 460 par le générateur non représenté. La source principale 450 est reliée séparément du circuit de bord 460, à la ligne L0 reliée
- à la ligne L1 d'alimentation de l'actionneur 220
- à la ligne L2 d'alimentation du calculateur 400 et
- à la ligne L3 d'alimentation du capteur 410.

La source principale 450 est reliée à la ligne L0 par l'intermédiaire d'une diode 452 ou composant équivalent qui ne permet le passage du courant que de l'accumulateur 451 vers la ligne L0.

La source auxiliaire 470 se compose d'une batterie 471 de faible capacité ou d'une pile reliée à la ligne L0 par l'intermédiaire d'un commutateur électronique 472.

De façon générale, la source auxiliaire peut comporter à la place d'une batterie, une pile au lithium, par exemple une à quatre piles CR123A, une à trois batteries au lithium, par exemple la batterie de type 16340 ou 18650 ou un condensateur. En variante, en fonctionnement normal, la tension du circuit principal est légèrement supérieure à celle de la source auxiliaire qui est rechargée lorsque nécessaire, en cas de générateur rechargeable (batterie, condensateur) par la source principale, la diode 452 empêchant la recherche en sens inverse. Dans une autre variante, un circuit de recharge de la source auxiliaire est incorporé, maintenant la source auxiliaire en charge, à courant très faible (condensateur, batterie Ni-MH, Ni-Cd) arrêtant la charge lorsque la batterie atteint le niveau de charge désiré (batterie au Lithium). Ce commutateur 472 tel qu'un thyristor, est commandé par le calculateur 400 pour s'ouvrir et permettre à la source auxiliaire 470, 471 d'alimenter la ligne L0 si un freinage est demandé par une action sur la pédale 411 et que la source principale 450 est défaillante. Le calculateur 400 mesure la tension ou le courant qu'il reçoit de la source principale 450 et, en cas de chute de tension ou d'absence de courant d'alimentation, il commute le commutateur 472 pour assurer la relève par la source auxiliaire 470.

La source auxiliaire 470 comporte également un témoin de fonctionnement 473 tel qu'un voyant détectant le passage du courant à partir de la batterie 471. Ce voyant est par exemple installé sur le tableau de bord du véhicule pour attirer l'attention du conducteur sur le fonctionnement de secours.

Celle-ci ne peut pas se décharger dans la source principale 450 du fait du blocage par la diode 452 et se limite à l'alimentation de secours du calculateur 400, du capteur de freinage 410 et de l'actionneur 220 de l'électrovanne 200 ; celle-ci peut ainsi commander par le tiroir 210, l'alimentation de la chambre de poussée 105 en liquide sous pression venant de la chambre 303 de l'accumulateur.

Dans les conditions de fonctionnement normal, le maître-cylindre 100 est commandé comme cela sera vu ensuite par le circuit de liquide de frein sous pression 300, 350 avant que le piston 121 du simulateur 120 ne touche la tige 106 du piston 103 du maître-cylindre 100 du fait de la détection du mouvement et de l'amplitude du mouvement de la pédale de frein 411 par le capteur 420 et de la réaction engendrée par le calculateur pour commander le maître-cylindre 100par le liquide hydraulique sous pression.

Le fonctionnement du système de freins hydrauliques à assistance électrohydraulique est le suivant :

Selon la figure 1, lorsque la pédale de frein 411 n'est pas actionnée, le tiroir de l'électrovanne 200 est dans la position (a) représentée. Elle relie la chambre de commande 105 du maître-cylindre au réservoir de liquide de frein 110. Le maître-cylindre 100 est en position de repos. L'électrovanne 200 coupe également la conduite 230 reliant l'accumulateur 300 à la chambre de commande 105 du maître-cylindre de sorte que la chambre 303 de l'accumulateur 300 est isolée.

Si à cause de l'actionnement antérieur des freins, la pression régnant dans la chambre 303 de l'accumulateur 300 est inférieure au seuil fixé, le calculateur 400 commande l'électrocompresseur 350 pour fournir du liquide sous pression à l'accumulateur 300.

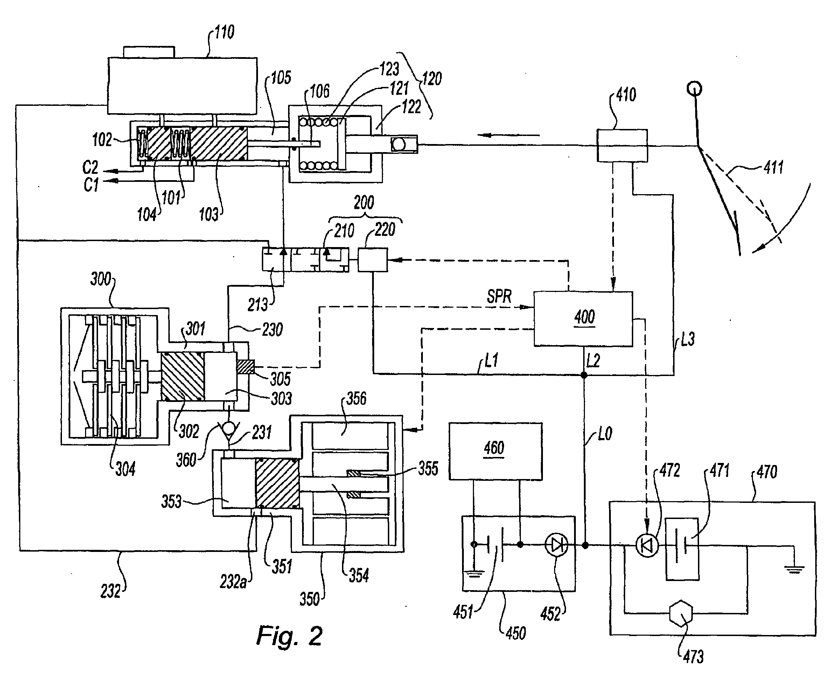

Selon la figure 2, en cas d'actionnement de la pédale de frein 411, le mouvement est détecté par le capteur 410 qui transmet un signal SP au calculateur 400. Le calculateur 400 commande l'actionneur 220 de l'électrovanne 200 pour déplacer le tiroir 210 dans la position (c) représentée à la figure 2. Dans cette position, le tiroir 210 met en communication, la chambre 303 de l'accumulateur 300 à la chambre de commande 105 du maître-cylindre 100 qui repousse le piston primaire 103 et, le cas échéant, le piston secondaire 104 du maître-cylindre (dans le cas d'un maître-cylindre tandem) de façon à envoyer du liquide de frein sous pression aux circuits de frein C1, C2.

Si, au moment de la commande d'une action de freinage, le calculateur 400 constate la défaillance de la source primaire 450 d'énergie électrique, par exemple parce que la batterie 451 est à plat, il commande le semi-conducteur 472 de façon à brancher la source auxiliaire d'énergie électrique 470 sur le circuit électrique L0, L1, L2, L3 constitué par le calculateur 400, le capteur 410 et l'actionneur 220 de l'électrovanne 200. Le calculateur 400 peut ainsi répondre à une action sur le frein 411 en déplaçant le tiroir 210 de l'électrovanne 200 pour le faire passer de la position neutre (a) de la figure 1 à la position active (c) de la figure 2.

La réserve constituée par la source auxiliaire 470 est suffisante pour permettre quelques actionnements de l'électrovanne 200 et assurer ainsi une commande de secours des circuits de frein C1, C2.

Cet actionnement de secours suppose également que la réserve de liquide sous pression dans l'accumulateur de pression 300 est suffisante pour commander le maître-cylindre 100.

Avantageusement, l'accumulateur 300 est disposé à proximité de la chambre de poussée 105 de manière à limiter les pertes de charge dans la conduite 230.

Il est bien entendu que la chambre de poussée 105 est avantageusement également mise en oeuvre pour les modes de freinage actif.

Dans une troisième variante de réalisation, le commutateur 472 est remplacé par une diode montée en tête bêche avec la diode 452. Ainsi, en fonctionnement normal, la tension électrique de la source principale étant supérieure à celle de la source auxiliaire, la diode 472 est bloquée. Si la tension de la source principale baisse, la diode 472 est automatiquement débloquée pour assurer l'alimentation des dispositifs de commande du dispositif d'assistance au freinage.

### NOMENCLATURE

- 100: Maître-cylindre
- 101, 102: Chambres du maître-cylindre
- 103: Piston primaire
- 104: Piston secondaire
- 105: Chambre de poussée
- 110: Réservoir de liquide de frein
- 120: Organe de transmission
- 121: Piston
- 122: Tige de commande
- 123: Ressort
- 200: Electrovanne
- 210: Tiroir
- 211,212,213: Secteurs du tiroir 210
- 220: Actionneur
- 231: Conduite
- 300: Accumulateur de pression
- 301: Cylindre
- 302: Piston
- 303: Chambre
- 304: Ressorts antagonistes
- 350: Electropompe
- 351: Cylindre
- 352: Piston
- 353: Chambre de pression
- 354: Tige du piston 352
- 355: Ecrou
- 356: Moteur électrique
- 360: Clapet anti-retour
- 400: Calculateur
- 410: Capteur
- 411: Pédale de frein
- 450: Source principale d'énergie électrique
- 451: Batterie du véhicule
- 452: Diode
- 460: Circuit de bord
- 470, 471: Source auxiliaire d'énergie électrique
- 473: Témoin de fonctionnement
- C1, C2: Circuits de frein
- L0, L1, L2, L3: Circuit électrique

## Revendications

1. Système de freins hydrauliques à assistance hydraulique comprenant
- un maître-cylindre (100) comportant une chambre de poussée (105) et recevant sur commande du liquide de freins sous pression d'un accumulateur (300) par l'intermédiaire d'une électrovanne (200) commandée par un calculateur (400) à partir du signal (CP) fourni par le capteur (410) de la pédale de frein (411),
- une source d'énergie électrique (450) alimentant au moins l'électrovanne (200), le calculateur (400) et le capteur (410),
**caractérisé par**
une source auxiliaire (470) d'énergie électrique branchée au circuit (L0, L1, L2, L3) alimentant le calculateur (400), le capteur (410) et l'électrovanne (200) en cas de détection de la défaillance de la source d'énergie principale électrique (450) pour permettre l'actionnement de secours de l'électrovanne (200) et l'alimentation du circuit de frein (C1, C2) pour un nombre limité de coups de frein.

2. Système de freins hydrauliques selon la revendication 1,
**caractérisé en ce que**
l'électrovanne (200), le calculateur (400) et le capteur (410) sont reliés à la source principale (450) de façon indépendante du circuit de bord (460) du véhicule par une ligne (L0) et par un composant unidirectionnel (452) ne permettant le passage du courant de la source principale (450) que vers l'électrovanne (200), le calculateur (400) et le capteur (410) et non en sens inverse.

3. Système de freins hydrauliques selon la revendication 1,
**caractérisé en ce que**
la source auxiliaire (470) est reliée au circuit (L0, L1, L2, L3) par un commutateur électronique commandé (472).

4. Système de freins hydrauliques selon la revendication 3,
**caractérisé en ce que**
le commutateur électronique commandé (472) est un thyristor.

5. Système de freins hydrauliques selon la revendication 1,
**caractérisé en ce que**
la source auxiliaire (470) est reliée à un témoin de fonctionnement (473) qui indique l'état actif de la source auxiliaire (470).

6. Système de freins hydrauliques selon la revendication 1,
**caractérisé en ce que**
le circuit (L0, L1, L2, L3) est relié à la source principale (450) par l'intermédiaire d'un composant électronique unidirectionnel (452) tel qu'une diode interdisant la recharge de la source principale (450) par la source auxiliaire (470).

7. Système de freins hydrauliques selon la revendication 1,
**caractérisé en ce que**
la source auxiliaire comporte une batterie ou une pile (471).

8. Système de freins hydrauliques selon la revendication 1,
**caractérisé par**
une liaison entre une électropompe (350) et le réseau de bord (460) indépendante du circuit (L0, L1, L2, L3) alimentant l'électrovanne (200), le calculateur (400) et le capteur (410).

## Claims

1. Hydraulic braking system with hydraulic boost assistance comprising
- a master cylinder (100) comprising a thrust chamber (105) and receiving, on command, pressurized brake fluid from an accumulator (300) via an electrically operated valve (200) controlled by a computer (400) on the basis of the signal (CP) supplied by the sensor (410) associated with the brake pedal (411),
- a source of electrical power (450) powering at least the electrically operated valve (200), the computer (400) and the sensor (410),
**characterized by**
an auxiliary electrical power source (470) connected to the circuit (L0, L1, L2, L3) powering the computer (400), the sensor (410) and the electrically operated valve (200) if failure of the main electrical power source (450) is detected in order to provide backup operation of the electrically operated valve (200) and powering of the brake circuit (C1, C2) for a limited number of braking actions.

2. Hydraulic braking system according to Claim 1, **characterized in that**
the electrically operated valve (200), the computer (400) and the sensor (410) are connected to the main source (450) independently of the on-board circuit (460) of the vehicle by a line (L0) and by a one-way component (452) that allows current from the main source (450) to flow only toward the electrically operated valve (200), the computer (400) and the sensor (410) and not in the opposite direction.

3. Hydraulic braking system according to Claim 1, **characterized in that**
the auxiliary source (470) is connected to the circuit (L0, L1, L2, L3) by a controlled electronic switch (472).

4. Hydraulic braking system according to Claim 3, **characterized in that**
the controlled electronic switch (472) is a thyristor.

5. Hydraulic braking system according to Claim 1, **characterized in that**
the auxiliary source (470) is connected to an operational indicator (473) that indicates that the auxiliary source (470) is active.

6. Hydraulic braking system according to Claim 1, **characterized in that**
the circuit (L0, L1, L2, L3) is connected to the main source (450) via a one-way electronic component (452) such as a diode that prevents the main source (450) from being recharged by the auxiliary source (470).

7. Hydraulic braking system according to Claim 1, **characterized in that**
the auxiliary source comprises a battery or cell (471).

8. Hydraulic braking system according to Claim 1, **characterized by**
a connection between an electric pump (350) and the onboard network (460) that is independent of the circuit (L0, L1, L2, L3) powering the electrically operated valve (200), the computer (400) and the sensor (410).

## Patentansprüche

1. Hydraulisches Bremssystem mit hydraulischer Kraftverstärkung, umfassend
- einen Hauptzylinder (100), der eine Schubkammer (105) aufweist und auf Anforderung druckbeaufschlagtes Bremsfluid von einem Druckspeicher (300) über ein Elektroventil (200) erhält, das durch einen Rechner (400) auf Grundlage des durch den Sensor (410) des Bremspedals (411) gelieferten Signals (CP) betätigt wird,
- eine elektrische Energiequelle (450), die mindestens das Elektroventil (450), den Rechner (400) und den Sensor (410) versorgt,
**gekennzeichnet durch**
eine elektrische Hilfsenergiequelle (470), die an den eine Schaltkreis (L0, L1, L2, L3) angeschlossen ist, der bei Detektion eines Ausfalls der elektrischen Hauptenergiequelle (.450) den Rechner (400), den Sensor (410) und das Elektroventil (200) versorgt, um die Notbetätigung des Elektroventils (200) und die Versorgung des Bremskreises (C1, C2) für eine begrenzte Anzahl von Bremsvorgängen zu ermöglichen.

2. Hydraulisches Bremssystem nach Anspruch 1,
**dadurch gekennzeichnet, dass**
das Elektroventil (200), der Rechner (400) und der Sensor (410) unabhängig vom Bordnetz (460) des Fahrzeugs über eine Leitung (L0) und eine unidirektionale Komponente (452), die nur den Stromdurchlass von der Hauptquelle (450) zum Elektroventil (200), Rechner (400) und Sensor (410) und nicht in umgekehrter Richtung ermöglicht, mit der Hauptquelle (450) verbunden sind.

3. Hydraulisches Bremssystem nach Anspruch 1,
**dadurch gekennzeichnet, dass**
die Hilfsquelle (470) über einen gesteuerten elektronischen Schalter (472) mit dem Schaltkreis (L0, L1, L2, L3) verbunden ist.

4. Hydraulisches Bremssystem nach Anspruch 3,
**dadurch gekennzeichnet, dass**
der gesteuerte elektronische Schalter (472) ein Thyristor ist.

5. Hydraulisches Bremssystem nach Anspruch 1,
**dadurch gekennzeichnet, dass**
die Hilfsquelle (470) mit einer Funktionsanzeige (473) verbunden ist, die anzeigt, dass die Hilfsquelle (470) in Betrieb ist.

6. Hydraulisches Bremssystem nach Anspruch 1,
**dadurch gekennzeichnet, dass**
der Schaltkreis (L0, L1, L2, L3) über eine elektronische unidirektionale Komponente (452) wie eine Diode, die das Wiederaufladen der Hauptquelle (450) durch die Hilfsquelle (470) verhindert, mit der Hauptquelle (450) verbunden ist.

7. Hydraulisches Bremssystem nach Anspruch 1,
**dadurch gekennzeichnet, dass**
die Hilfsquelle eine Batterie oder eine Zelle (471) aufweist.

8. Hydraulisches Bremssystem nach Anspruch 1,
**gekennzeichnet durch**
eine Verbindung zwischen einer Elektropumpe (350) und dem Bordnetz (460) unabhängig vom Schaltkreis (L0, L1, L2, L3) , der das Elektroventil (200), den Rechner (400) und den Sensor (410) versorgt.
